# EUROPEAN PATENT APPLICATION

(11) **EP 2 348 200 A2**
(43) Date of publication of application: **27.07.2011**
(21) Application number: 10176234.2
(22) Date of filing: 10.09.2010
(51) Int. Cl.: F01K 25/10, F22B 1/18, F01K 23/10, F22B 7/06, F22B 15/00

(54) **Direct evaporator apparatus as well as system and method for energy recovery**

(30) Priority: 15.09.2009 US 559871
(71) Applicant: General Electric Company, Schenectady, NY 12345 (US)
(72) Inventor: Lehar, Matthew Alexander, 85748 Munich (DE); Freund, Sebastian W., 85748 Munich (DE); Frey, Thomas Johannes, 85748 Munich (DE); Aumann, Richard, 80796 München (DE); Ast, Gabor, 85748 Munich (DE)
(74) Representative: Illingworth-Law, William Illingworth

(57) **Abstract**

A direct evaporator apparatus (10) for use in an organic Rankine cycle energy recovery system, comprising: (a) a housing (44) comprising a heat source gas inlet (36), and a heat source gas outlet (38), said housing defining a heat source gas flow path (46) from said inlet to said outlet; and (b) a heat exchange tube disposed entirely within said heat source flow path, said heat exchange tube (18) being configured to accommodate an organic Rankine cycle working fluid, said heat exchange tube comprising a working fluid inlet (40) and a working fluid outlet (42), said heat exchange tube defining three zones, a first zone (20) adjacent to said heat source gas outlet, a second zone (22) adjacent to said heat source gas inlet, and a third zone (24) disposed between said first zone and said second zone, said working fluid inlet being in direct fluid communication with said first zone, and said working fluid outlet being in direct fluid communication with said third zone; wherein said first zone is not in direct fluid communication with said third zone. An organic Rankine cycle energy recovery system and a method of energy recovery are also provided.

## Description

### BACKGROUND

The invention relates generally to an organic Rankine cycle energy recovery system, and more particularly to a direct evaporator apparatus and method for energy recovery employing the same.

So called "waste heat" generated by a large number of human activities represents a valuable and often underutilized resource. Sources of waste heat include hot combustion exhaust gases of various types including flue gas. Industrial turbomachinery such as turbines frequently create large amounts of recoverable waste heat in the form of hot gaseous exhaust streams.

Organic Rankine cycle energy recovery systems have been deployed as retrofits for small- and medium-scale gas turbines, to capture waste heat from the turbine's hot gas stream and convert the heat recovered into desirable power output. In an organic Rankine cycle, heat is transmitted to an organic fluid, typically called the working fluid, in a closed loop. The working fluid is heated by thermal contact with the waste heat and is vaporized and then expanded through a work extraction device such as a turbine during which expansion kinetic energy is transferred from the expanding gaseous working fluid to the moving components of the turbine. Mechanical energy is generated thereby which can be converted into electrical energy, for example. The gaseous working fluid having transferred a portion of its energy content to the turbine is then condensed into a liquid state and returned to the heating stages of the closed loop for reuse. A working fluid used in such organic Rankine cycles is typically a hydrocarbon, which is a liquid under ambient conditions. As such, the working fluid is subject to degradation at high temperature. For example, at 500°C, a temperature typical of a hot heat source gas from a turbine exhaust stream, even highly stable hydrocarbons begin to degrade. Worse yet, a hydrocarbon working fluid useful in an organic Rankine cycle energy recovery system may begin degrade at temperatures far lower than 500°C. Thus, the use of an organic Rankine cycle energy recovery system to recover waste heat from a gas turbine system is faced with the dilemma that the temperature of the exhaust is too high to bring into direct thermal contact with the working fluid of the organic Rankine cycle energy recovery system.

In order to avoid the aforementioned issue, an intermediate thermal fluid system is generally used to convey heat from the exhaust to an organic Rankine cycle boiler. In an example, intermediate thermal fluid system is an oil-filled coil, which moderates the temperature of the working fluid in the organic Rankine cycle boiler. However, the intermediate thermal fluid system can represent significant portion of the total cost of an organic Rankine cycle energy recovery system. Furthermore, the intermediate thermal fluid system both increases the complexity of the organic Rankine cycle energy recovery system and represents an additional component the presence of which lowers the overall efficiency of thermal energy recovery.

Therefore, an improved organic Rankine cycle system is desirable to address one or more of the aforementioned issues.

### BRIEF DESCRIPTION

In one aspect the present invention provides a direct evaporator apparatus for use in an organic Rankine cycle energy recovery system, comprising: (a) a housing comprising a heat source gas inlet, and a heat source gas outlet, said housing defining a heat source gas flow path from said inlet to said outlet; and (b) a heat exchange tube disposed entirely within said heat source gas flow path, said heat exchange tube being configured to accommodate an organic Rankine cycle working fluid, said heat exchange tube comprising a working fluid inlet and a working fluid outlet, said heat exchange tube defining three zones, a first zone adjacent to said heat source gas outlet, a second zone adjacent to said heat source gas inlet, and a third zone disposed between said first zone and said second zone, said working fluid inlet being in direct fluid communication with said first zone, and said working fluid outlet being in direct fluid communication with said third zone; wherein said first zone is not in direct fluid communication with said third zone.

In another aspect, the present invention provides an organic Rankine cycle energy recovery system comprising: (a) a direct evaporator apparatus comprising (i) a housing comprising a heat source gas inlet and a heat source gas outlet, said housing defining a heat source gas flow path from said inlet to said outlet; and (ii) a heat exchange tube disposed entirely within said heat source gas flow path, said heat exchange tube being configured to accommodate an organic Rankine cycle working fluid, said heat exchange tube comprising a working fluid inlet and a working fluid outlet, said heat exchange tube defining three zones, a first zone adjacent to said heat source gas outlet, a second zone adjacent to said heat source gas inlet, and a third zone disposed between said first zone and said second zone, said working fluid inlet being in direct fluid communication with said first zone, and said working fluid outlet being in direct fluid communication with said third zone; (b) work extraction device; (c) a condenser; and (d) a pump; wherein the direct evaporator apparatus, work extraction device, condenser and pump a configured to operate as a closed loop.

In yet another aspect, the present invention provides a method of energy recovery comprising: (a) introducing a heat source gas having a temperature into a direct evaporator apparatus containing a liquid working fluid; (b) transferring heat from the heat source gas having a temperature T1 to the working fluid to produce a superheated gaseous working fluid and a heat source gas having temperature T2; (c) expanding the superheated gaseous working fluid having a temperature T3 through an work extraction device to produce mechanical energy and a gaseous working fluid having a temperature T4; (d) condensing the gaseous working fluid to provide a liquid state working fluid; and (e) returning the liquid state working fluid to the direct evaporator apparatus; wherein the direct evaporator apparatus comprises (i) a housing comprising a heat source gas inlet, and a heat source gas outlet, said housing defining a heat source gas flow path from said inlet to said outlet; and a heat exchange tube disposed entirely within said heat source gas flow path, said heat exchange tube being configured to accommodate the working fluid, said heat exchange tube comprising a working fluid inlet and a working fluid outlet, said heat exchange tube defining three zones, a first zone adjacent to said heat source gas outlet, a second zone adjacent to said heat source gas inlet, and a third zone disposed between said first zone and said second zone, said working fluid inlet being in direct fluid communication with said first zone, and said working fluid outlet being in direct fluid communication with said third zone; and wherein said first zone is not in direct fluid communication with said third zone.

### BRIEF DESCRIPTION OF THE DRAWING FIGURES

These and other features, aspects, and advantages of the present invention will become better understood when the following detailed description is read with reference to the accompanying drawings in which like characters represent like parts throughout the drawings, wherein:

Fig. 1 is a schematic illustration of a direct evaporator apparatus in accordance with an embodiment of the invention.

Fig. 2 is a schematic illustration of a direct evaporator apparatus in accordance with an embodiment of the invention.

Fig. 3 is a graphical illustration of thermal performance characteristics of an embodiment of the invention.

Fig. 4 is a graphical illustration of thermal performance characteristics of a conventional direct evaporator apparatus.

Fig. 5 is a schematic illustration of an organic Rankine cycle energy recovery system in accordance with an embodiment of the invention.

### DETAILED DESCRIPTION

In the following specification and the claims, which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

It is also understood that terms such as "top," "bottom," "outward," "inward," and the like are words of convenience and are not to be construed as limiting terms. Furthermore, whenever a particular feature of the invention is said to comprise or consist of at least one of a number of elements of a group and combinations thereof, it is understood that the feature may comprise or consist of any of the elements of the group, either individually or in combination with any of the other elements of that group.

Approximating language, as used herein throughout the specification and claims, may be applied to modify any quantitative representation that could permissibly vary without resulting in a change in the basic function to which it is related. Accordingly, a value modified by a term or terms, such as "about", is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term.

As noted, in one embodiment the present invention provides a direct evaporator apparatus for use in an organic Rankine cycle energy recovery system, comprising (a) a housing comprising a heat source gas inlet, and a heat source gas outlet, said housing defining a heat source gas flow path from said inlet to said outlet; and (b) a heat exchange tube disposed entirely within said heat gas source flow path. The heat exchange tube is configured to accommodate an organic Rankine cycle working fluid, and the heat exchange tube comprises a working fluid inlet and a working fluid outlet. The heat exchange tube is defined by three zones, a first zone adjacent to said heat source gas outlet, a second zone adjacent to said heat source gas inlet, and a third zone disposed between said first zone and said second zone. The working fluid inlet is in direct fluid communication with said first zone, and said working fluid outlet being in direct fluid communication with said third zone. The first zone is not in direct fluid communication with said third zone.

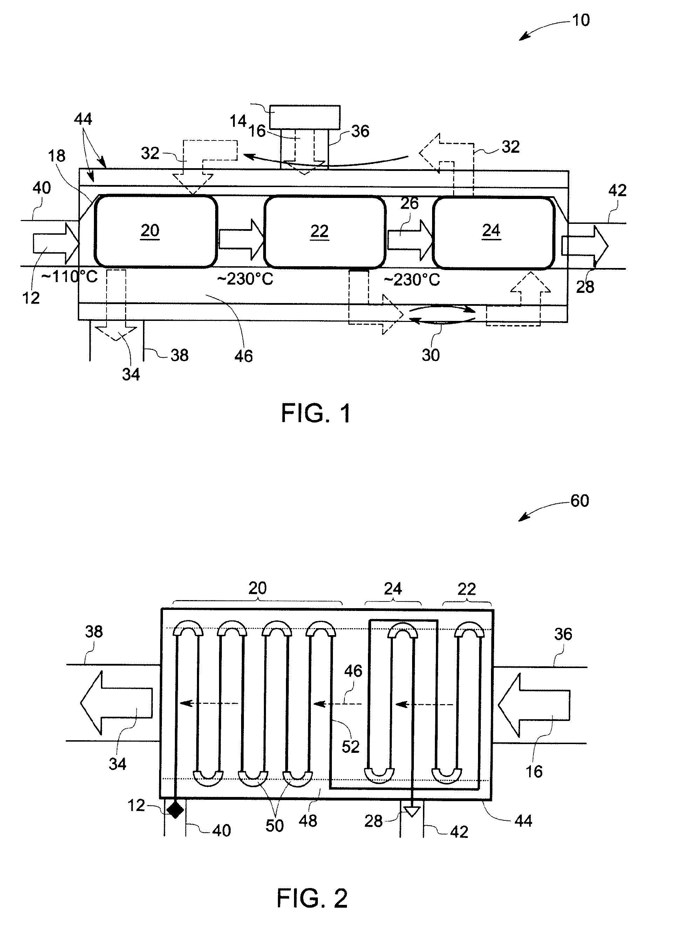

The Fig. 1. is a schematic illustration of direct evaporator apparatus 10. The direct evaporator apparatus 10 is shown in Fig. 1 as coupled to a heat source 14 that serves as a source of heat source gas 16. The direct evaporator apparatus includes a housing 44 that includes a heat source gas inlet 36, and a heat source gas outlet 38. The housing defines a heat source gas flow path from said inlet to said outlet. A heat exchange tube 18 is disposed entirely within the heat source gas flow path 46. As used herein the term "disposed entirely within the heat source gas flow path" means that the heat exchange tube is disposed entirely within the housing of the direct evaporator apparatus such that during operation, a working fluid traverses the exterior wall of the housing only twice; once as the working fluid enters the direct evaporator apparatus via the working fluid inlet 40 and once as the working fluid exits the direct evaporator apparatus via the working fluid outlet 42. The heat exchange tube 18 is configured to accommodate an organic Rankine cycle working fluid 12. As noted, in the embodiment shown in Fig. 1, the direct evaporator apparatus 10 is shown coupled to a heat source 14 which is configured to provide a heat source gas 16 which enters the direct evaporator apparatus via heat source gas inlet 36 and contacts the heat exchange tube 18 along the heat source gas flow path 46 to facilitate heat exchange between the working fluid 12 and the heat source gas 16 in a manner that does not overheat the working fluid 12. The heat exchange tube includes a working fluid inlet 40 and a working fluid outlet 42. The heat exchange tube defines three zones, a first zone 20 adjacent to the heat source gas outlet, a second zone 22 adjacent to said heat source gas inlet, and a third zone 24 disposed, with respect to the heat source gas flow path, between the first zone and the second zone. Zone 24 is said to be between zone 22 and zone 20 since a heat source gas 16 entering the direct evaporator apparatus at heat source gas inlet 36 first contacts zone 22 of the heat exchange tube 18, and must contact zone 24 of the heat exchange tube before contacting zone 20 of the heat exchange tube. Zone 20 is referred to as the "first zone" for the purposes of this discussion because it is in direct fluid communication with the working fluid inlet. Zone 22 is referred to as the "second zone" for the purposes of this discussion because it is in direct fluid communication with the first zone 20. Zone 24 is referred to as the "third zone" for the purposes of this discussion because it is in direct fluid communication with the second zone 22. The first zone 20 is not in direct fluid communication with said third zone 24. The term "direct fluid communication" as used herein means that there is no intervening zone between components of the direct evaporator apparatus. Thus, there is direct fluid communication between the working fluid inlet 40 and the first zone 20, direct fluid communication between the first zone 20 and the second zone 22, direct fluid communication between the second zone 22 and the third zone 24, and direct fluid communication between the third zone 24 and the working fluid outlet 42

Working fluid in the liquid state enters the first zone 20 of the direct evaporator apparatus via working fluid inlet 40 where it is preheated as it moves towards zone 22 of the heat exchange tube. Thus second zone 22 receives an inflow of the working fluid 12 from the first zone 20 and vaporizes the working fluid 12. As shown in Fig. 1 the second zone 22 is configured such that the heat source gas 16 from the heat source 14 entering the direct evaporator apparatus via the heat source gas inlet 36 contacts that portion of the heat exchange tube constituting zone 22, and heat exchange occurs between the heat source gas 16 and the working fluid sufficient to vaporize the working fluid. Various operating factors such as the flow rate of the working fluid into the direct evaporator apparatus and the size of the heat exchange tube can be used to control the temperature of the working fluid inside the various zones of the heat exchange tube such that overheating and degradation of the working fluid may be avoided. In one embodiment, the temperature 26 of vaporized working fluid exiting zone 22 can be maintained at a temperature a range from about 150 °C to about 300 °C. In one embodiment, the temperature 26 of the vaporized working fluid exiting the second zone 22 is about 230°C.

As noted, the heat source gas 16 enters the direct evaporator apparatus at heat source gas inlet 36 and is hottest at the heat source gas inlet. In one embodiment, the heat source gas entering the direct evaporator apparatus at the heat source gas inlet is at a temperature in a range between about 400°C and about 600°C. In an alternate embodiment, the heat source gas entering the direct evaporator apparatus at the heat source gas inlet is at a temperature in a range between about 400°C and about 500°C. In yet another embodiment, the heat source gas entering the direct evaporator apparatus at the heat source gas inlet is at a temperature in a range between about 450°C and about 500°C. As noted, the heat source gas first contacts zone 22, sometimes referred to as the evaporation zone, and cools as heat is transferred from the heat source gas to the portion of the heat exchange tube constituting zone 22. Internal structures, for example baffles and flow channels, present in the heat source gas flow path, not shown in Fig. 1 direct the flow of heat source gas from the inlet and into contact with zone 22 of the heat exchange tube. Following contact with zone 22, the heat source gas is directed into contact with zone 24. Those skilled in the art will appreciate that the heat source gas, which is brought into contact with zone 24 has a lower temperature 30 than the heat source gas being brought into contact with zone 22. Notwithstanding the lower temperature 30 of the heat source gas, which is brought into contact with zone 24 of the heat exchange tube, the heat source gas contains sufficient heat to superheat the working fluid within zone 24 as it encounters the heat exchange tube in zone 24. The superheated working fluid having a temperature 28 exits the direct evaporator apparatus at working fluid outlet 42. As the heat source gas transfers its heat energy to the zone 24, also referred to as the superheater zone, it is further cooled. Thus, heat source gas having contacted the heat exchange tube in zone 24 and having a temperature 32 is directed by means of internal structures defining the heat source gas flow path into contact with zone 20, also referred to as the preheater zone.

One of the advantages provided by certain embodiments of the present invention represented by Fig. 1 and Fig. 2 derive from a direct evaporator apparatus configuration in which the heat exchange tube is disposed entirely within the confines of direct evaporator apparatus housing coupled with the relative positions of the heat source gas inlet and the evaporation zone and the sequence in which the heat source gas contacts during operation the evaporation zone, the superheater zone and the preheater zone. Thus, by allowing the heat source gas 16 to enter the second zone 22 prior to entering the third zone 24, superheating step takes place after the heat source gas has transferred much of its heat to the working fluid in the evaporation zone and the temperature difference between the heat source gas contacting the superheater zone and the superheated working fluid exiting the superheater zone is reduced relative to the a configuration in which heat source gas is contacted directly with the superheater zone. This can work to prevent hot spots in the superheater zone at which the superheated working fluid may undergo significant and harmful degradation. Thus, a potential degradation of the film of the working fluid due to contact with the relatively higher temperature heat source gas 16 from the heat source 14 is eliminated. As noted, the configuration in which the heat exchange tube is disposed entirely within the confines of the direct evaporator apparatus housing. This design feature is also at times referred to as "being disposed entirely within the heat source gas flow path" defined by the housing. It will be appreciated that working fluids which are hydrocarbons are extremely flammable and under certain conditions burn with explosive force. Thus, the direct evaporator apparatus provided by the present invention offers an additional design simplification relative to known direct evaporator apparatus, and this design simplification can enhance the overall safety of an organic Rankine cycle energy recovery system comprising the direct evaporator apparatus provided by the present invention.

Returning to Fig.1, the heat source gas having temperature 32 exits the third zone 24 and is conveyed to the first zone 20. In one embodiment, temperature 32 of the heat source gas is a range from about 375°C to about 450°C. As noted, the first zone 20 contains working fluid 12 in a liquid state. As heat is transferred across that portion of the heat exchange tube constituting zone 20, the temperature of the working fluid increases and the temperature of the heat source gas is further decreased such that as the heat source gas is directed to and passes out of the heat source gas outlet it has yet a lower temperature 34 relative to heat source gas temperatures at the heat source gas inlet, heat source gas temperature 30 and heat source gas temperature 32.

As noted, the working fluid 12 may in one embodiment, be a hydrocarbon. Non-limiting examples of hydrocarbons include cyclopentane, n-pentane, methylcyclobutane, isopentane, methylcyclopentane propane, butane, n-hexane, and cyclohexane. In another embodiment, the working fluid can be a mixture of two or more hydrocarbons. In one embodiment, the working fluid is a binary fluid such as for example cyclohexane-propane, cyclohexane-butane, cyclopentane-butane, or cyclopentane-cyclohexane mixtures. In yet another embodiment, the working fluid is a hydrocarbon is selected from the group consisting of methylcyclobutane, cyclopentane, isopentane, cyclohexane, and methycyclopentane.

In various embodiments of the invention, the heat source may be any heat source, which may be used to produce a gas stream susceptible to introduction into the direct evaporator apparatus via the heat source gas inlet. In one embodiment, the heat source is a gas turbine, the exhaust from which may be used as the heat source gas. Other heat sources include exhaust gases from residential, commercial, and industrial heat sources such as home clothes dryers, air conditioning units, refrigeration units, and gas streams produced during fuel combustion, for example flue gas. In one embodiment, geothermal heat is employed as the heat source.

Fig. 2 is a schematic illustration of a direct evaporator apparatus 60 in accordance with one embodiment of the invention. The direct evaporator apparatus 60 shown in Fig. 2 may be coupled to a heat source 14 (Fig. 1) that serves as a source of heat source gas 16. The direct evaporator apparatus includes a housing 44 that includes a heat source gas inlet 36, and a heat source gas outlet 38. A heat exchange tube 52 is disposed entirely within the heat source gas flow path 46. In Fig. 2 the heat source gas flow path 46 is essentially the entire interior of the direct evaporator apparatus defined by the housing wall 48 and space within the interior of the direct evaporator apparatus not occupied by the heat exchange tube 52. The heat exchange tube is configured to accommodate an organic Rankine cycle working fluid 12 such that during operation, the working fluid enters and exits the housing only twice; once as the working fluid enters the direct evaporator apparatus via the working fluid inlet 40 and once as the working fluid exits the direct evaporator apparatus via the working fluid outlet 42. The working fluid travels along a working fluid flow path defined by the heat exchange tube 52. In the embodiment illustrated in Fig. 2 the heat exchange tube 52 is shown as being secured within the direct evaporator apparatus housing 44 by embedding portions 50 of the heat exchange tube 52 within the housing wall 48. In the embodiment illustrated in Fig. 2, the portions 50 of the heat exchange tube embedded within the housing wall lie outside of the heat source gas flow path but remain entirely within the housing 44 of the direct evaporator apparatus 60. As such, the configuration of the heat exchange tube 52 illustrated in Fig. 2 satisfies the requirement the heat exchange tube is "disposed entirely within heat source gas flow path" 46 (as that term is defined herein). An alternate, but equivalent way of expressing this same limitation is that that the heat exchange tube 52 is disposed entirely within the housing 44 of the direct evaporator apparatus 60 such that during operation, a working fluid 12 traverses the exterior wall of the housing 44 only twice; once as the working fluid enters the direct evaporator apparatus via the working fluid inlet 40 and once as the working fluid exits the direct evaporator apparatus via the working fluid outlet 42. With the exception of heat exchange tube portions 50, the heat exchange tube 52 lies within heat source gas flow path 46. The heat exchange tube 52 defines three zones, a first zone 20 (a preheater zone) adjacent to the heat source gas outlet, a second zone 22 (an evaporation zone) adjacent to said heat source gas inlet, and a third zone 24 (superheater zone) disposed between the first zone and the second zone. The first zone 20 is not in direct fluid communication with said third zone 24. The working fluid inlet 40 is in direct fluid communication with said first zone 20. The working fluid outlet 42 is in direct fluid communication with said third zone 24. In one embodiment, the heat exchange tube includes a plurality of bends in each of the first zone, second zone and third zone. In one embodiment, the heat exchange tube 52 is configured in parallel rows in each of the first zone, second zone and third zone. In one embodiment, each of the first zone, second zone and third zone of the heat exchange tube is configured in at least one row.

During operation the direct evaporator apparatus illustrated in Fig. 2 the heat source gas 16 entering at heat source gas inlet 36 first encounters the second zone 22. Heat from the heat source gas 16 is transferred to the working fluid 12 present in the second zone 22, the heat transferred being sufficient to evaporate at least a portion of the working fluid 12 present in the second zone. Heat source gas having a relatively lower temperature and heat content than the heat source gas entering the direct evaporator apparatus at heat source gas inlet 36 next encounters the third zone 24 in which the working fluid is superheated and superheated working fluid exits the direct evaporator apparatus via working fluid outlet 42. Heat source gas having a relatively lower temperature and heat content than the heat source gas first encountering the heat exchange tube in third zone 24 next encounters the first zone 20 in which the working fluid in a liquid state enters at working fluid inlet 40 and is preheated while still in a liquid state. The working fluid in first zone 20 is conducted along the heat exchange tube to the second zone 22 where it is evaporated and supplied to third zone 23.

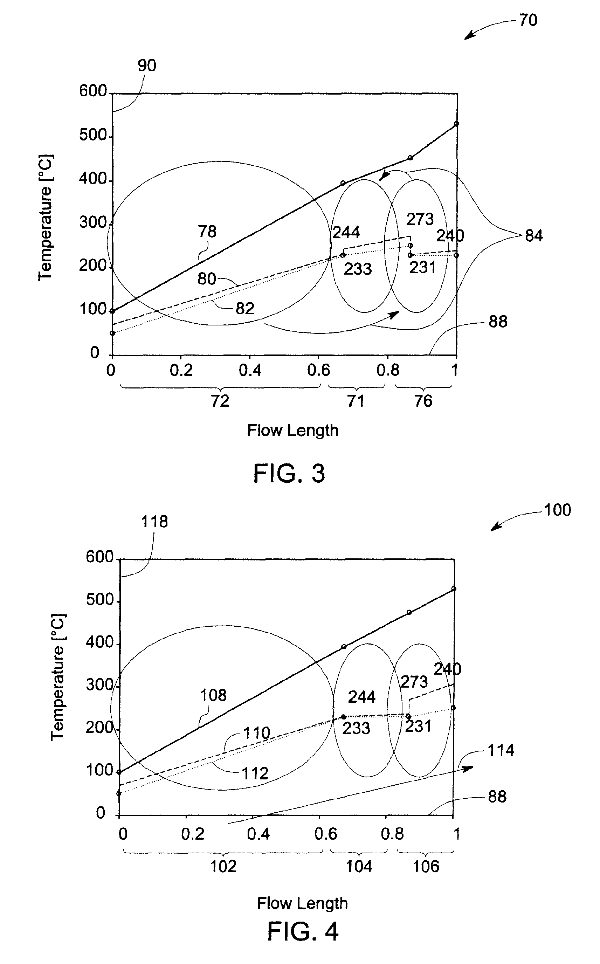

Fig. 3 presents results obtained from simulation experiments on a direct evaporator apparatus configured as shown in Fig. 2, and using a model which assumes linear flow of the heat source gas 16 from the heat source gas inlet 36 to the heat source gas outlet 38. X-axis 88 represents the distance from the heat source gas outlet 38 which is defined to be at a distance of 0 units from the heat source gas outlet 38, and the heat source gas inlet 36 is defined to be a distance of 1 unit from the heat source gas outlet 38. For the purposes of the simulation studies illustrated by Fig. 3 the temperatures given are for idealized points within the direct evaporator apparatus at various distances from the heat source gas outlet 38. The distance between a particular idealized points within the direct evaporator apparatus is at times herein referred to as the "flow length". The Y-axis 90 shows the temperature 78 in degrees centigrade of the heat source gas as a function of the distance from the heat source gas outlet, the temperature 80 of the working fluid at the inner wall of the heat exchange tube (this temperature 80 is at times herein referred to as the "film temperature") as a function of the distance from the heat source gas outlet, and the bulk temperature 82 of the working fluid within the heat exchange tube as a function of the distance from the heat source gas outlet. In the experiments illustrated in by Fig. 3, the temperature 78 of the heat source gas is more than 500°C at the maximum distance from the heat source gas outlet and decreases to about 100 at the heat source gas outlet ("flow length" = 0 units)°C as heat is transferred to the working fluid. The heat exchange tube is configured within the direct evaporator apparatus as shown in Fig.2 and defines three zones a first zone 72, a second zone 76 and a third zone 74 which are indicated. The working fluid in the second zone 76 (also at times herein referred to as the evaporation zone) in which the heat source gas is at its hottest remains at remains cooler than the working fluid in the third zone 74 (also at times herein referred to as the superheater zone). The film temperatures 80 of the working fluid in contact with the first zone 72 (also at times herein referred to as the preheater zone) increases from about 80°C in the first zone 72 to about 244°C as the working fluid enters the second zone 76, and to about 273°C as the working fluid enters the third zone 74. The simulation experiments suggest that the direct evaporator apparatus configured as in Fig. 2 can be operated in a temperature regime well below a threshold decomposition temperature (300°C) of a typical working fluid. The bulk temperatures 82 of the working fluid also follow a similar pattern similar with the hottest working fluid bulk temperatures occurring in the third zone 74. A narrow gap between the working fluid bulk temperature 82 and working fluid film temperature 80, especially in the third zone 74, indicates a greater stability of the film temperature in the third zone 74 and limits the highest temperatures attained within the heat exchange tube to temperatures falling within a desirable range well below the decomposition threshold temperature, despite the elevated temperature of the heat source gas.

Fig. 4 is a graphical illustration 100 of temperatures 108 of a heat source gas, the film temperatures 110 of a working fluid, and bulk temperatures 112 of the working fluid in the first zone, second zone and third zone of a conventional direct evaporator apparatus not employing the flow arrangement in Fig. 2. The experiments were essentially identical to those performed and illustrated I Fig. 3 with the exception that the heat exchange tube was configured such that the superheater zone (106) was adjacent to the heat source gas inlet, the evaporation zone (104) was adjacent to the superheater zone, and the preheater zone 102 was adjacent to the heat source gas outlet. Otherwise, the conventions, assumptions and definitions used in the experiments illustrated in Fig. 3 were also used in the experiments illustrated in Fig. 4. The X-axis, also referred to as flow length is labeled drawing element 116. The Y-axis (Temperature in degrees centigrade) is labeled drawing element 118. Again, the reader is reminded that the graphical illustration 100 is the result of simulation experiments. It is noteworthy that temperature 110 of the working fluid in contact with the wall of the heat exchange tube is higher than about 300°C at points within the superheater zone 106 and that the temperature gap within third zone 106 between the bulk working fluid and temperature of the working fluid at wall of the heat exchange tube is significantly wider than the corresponding gap observed in Fig. 3.

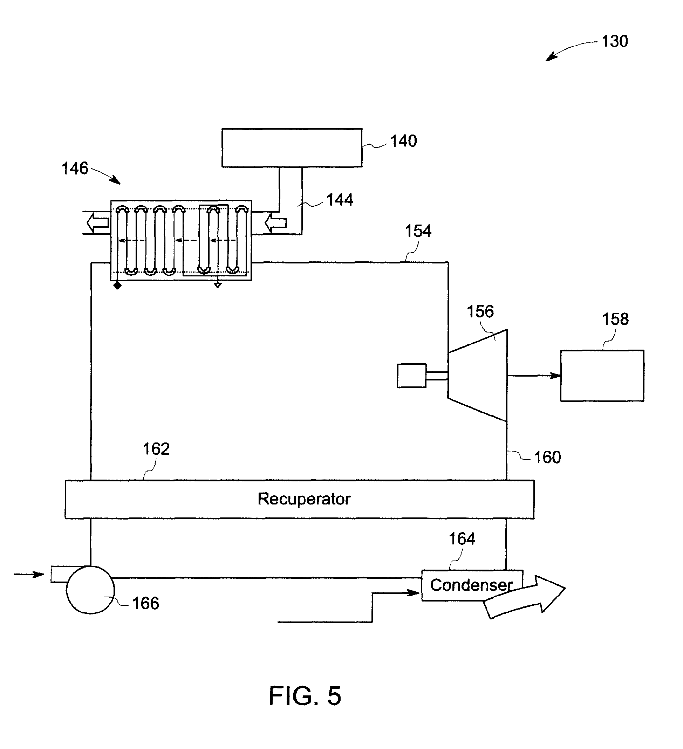

Referring to Fig.5, an organic Rankine cycle energy recovery system 130 is illustrated in accordance with one embodiment of the present invention. The illustrated organic Rankine cycle energy recovery system 130 includes an organic Rankine cycle system 172. The working fluid 174 is circulated through the organic Rankine cycle 130. The organic Rankine cycle system includes a direct evaporator apparatus 146 coupled to a heat source 140, for example an exhaust unit of a heat generation system 132 (for example, an engine). In one example, the temperature of the exhaust unit of the engine may be in a range from about 400 °C to 500 °C. The direct evaporator apparatus 146 is configured as described in Fig.1 and receives heat from the heat source gas or exhaust gas 144 generated from the heat source 140 and generates a working fluid vapor 154. In one example, the working fluid vapor may be at a pressure of 19 bars and temperature of 225 °C. The working fluid vapor is passed through an expander 156 (which in one example comprises a radial type expander) to drive a work extraction device for example a generator unit 158. In one embodiment, the work extraction device is a turbine. In one embodiment, the expander may be axial type expander, impulse type expander, or high temperature screw type expander. In one embodiment, the energy recovery system may include a turbine by-pass duct (not shown). After passing through the expander 156, the first working fluid vapor 160 at a relatively lower pressure and lower temperature is passed through a recuperator 162 which may function as a heat exchange unit. The working fluid vapor is condensed into a liquid using a condenser 164, which is then pumped via a pump 166 to the direct evaporator apparatus 146. In one example, the condensed working fluid may be supplied to the direct evaporator apparatus 146 at a pressure of 1.4 bars and 95 °C. The direct evaporator apparatus, work extraction device, condenser and pump are configured to operate as a closed loop. The cycle may then be repeated.

In one embodiment, a method of energy recovery is provided. The method includes (a) introducing a heat source gas having a temperature into a direct evaporator apparatus containing a liquid working fluid; (b) transferring heat from the heat source gas having a temperature T1 to the working fluid to produce a superheated gaseous working fluid and a heat source gas having temperature T2;(c) expanding the superheated gaseous working fluid having a temperature T3 through an work extraction device to produce mechanical energy and a gaseous working fluid having a temperature T4; (d) condensing the gaseous working fluid to provide a liquid state working fluid; and (e) returning the liquid state working fluid to the direct evaporator apparatus. In one embodiment, the heat source gas has a temperature T1 in a range from about 400°C to about 600°C. In another embodiment, the heat source gas has a temperature T1 in a range from about 400°C to about 550°C. In one embodiment, the heat source gas has a temperature T2 in a range from about 100°C to about 250°C. In another embodiment, the superheated gaseous working fluid has a temperature T3 in a range from about 200°C to about 300°C. In one embodiment, the working fluid in the first zone is at a temperature in a range from about 20°C to about 150°C. In another embodiment, the working fluid in the second zone is at a temperature in a range from about 50°C to about 300°C. In yet another embodiment, the working fluid in the third zone is at a temperature in a range from about 200°C to about 300°C.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects of the present invention are defined in the following numbered clauses:
1. A direct evaporator apparatus for use in an organic Rankine cycle energy recovery system, comprising:
   (a) a housing comprising a heat source gas inlet, and a heat source gas outlet, said housing defining a heat source gas flow path from said inlet to said outlet; and
   (b) a heat exchange tube disposed entirely within said heat source flow path, said heat exchange tube being configured to accommodate an organic Rankine cycle working fluid, said heat exchange tube comprising a working fluid inlet and a working fluid outlet, said heat exchange tube defining three zones, a first zone adjacent to said heat source gas outlet, a second zone adjacent to said heat source gas inlet, and a third zone disposed between said first zone and said second zone, said working fluid inlet being in direct fluid communication with said first zone, and said working fluid outlet being in direct fluid communication with said third zone;
   wherein said first zone is not in direct fluid communication with said third zone.
2. The direct evaporator apparatus according to clause 1, wherein said heat exchange tube comprises a plurality of bends in each of the first zone, second zone and third zone.
3. The direct evaporator apparatus according to clause 1 or clause 2, wherein the heat exchange tube is configured in parallel rows in each of the first zone, second zone and third zone.
4. The direct evaporator apparatus according to any preceding clause, wherein in each of the first zone, second zone and third zone of the heat exchange tube is configured in at least one row.
5. An organic Rankine cycle energy recovery system comprising:
   (a) a direct evaporator apparatus comprising (i) a housing comprising a heat source gas inlet and a heat source gas outlet, said housing defining a heat source gas flow path from said inlet to said outlet; and (ii) a heat exchange tube disposed entirely within said heat source flow path, said heat exchange tube being configured to accommodate an organic Rankine cycle working fluid, said heat exchange tube comprising a working fluid inlet and a working fluid outlet, said heat exchange tube defining three zones, a first zone adjacent to said heat source gas outlet, a second zone adjacent to said heat source gas inlet, and a third zone disposed between said first zone and said second zone, said working fluid inlet being in direct fluid communication with said first zone, and said working fluid outlet being in direct fluid communication with said third zone;
   (b) work extraction device;
   (c) a condenser; and
   (d) a pump;
   wherein the direct evaporator apparatus, work extraction device, condenser and pump a configured to operate as a closed loop.
6. The energy recovery system according to clause 5, wherein said heat exchange tube comprises a plurality of bends in each of the first zone, second zone and third zone.
7. The energy recovery system according to clause 5 or clause 6, wherein the heat exchange tube is configured in parallel rows in each of the first zone, second zone and third zone.
8. The energy recovery system according to any of clauses 5 to 7, further comprising a recouperator..
9. The energy recovery system according to any of clauses 5 to 8, wherein the work extraction device comprises a turbine.
10. The energy recovery system according to clause 9, further comprising a turbine by-pass duct.
11. A method of energy recovery comprising:
   (a) introducing a heat source gas having a temperature into a direct evaporator apparatus containing a liquid working fluid;
   (b) transferring heat from the heat source gas having a temperature T1 to the working fluid to produce a superheated gaseous working fluid and a heat source gas having temperature T2;
   (c) expanding the superheated gaseous working fluid having a temperature T3 through a work extraction device to produce mechanical energy and a gaseous working fluid having a temperature T4;
   (d) condensing the gaseous working fluid to provide a liquid state working fluid; and
   (e) returning the liquid state working fluid to the direct evaporator apparatus;
   wherein the direct evaporator apparatus comprises (i) a housing comprising a heat source gas inlet, and a heat source gas outlet, said housing defining a heat source gas flow path from said inlet to said outlet; and a heat exchange tube disposed entirely within said heat source flow path, said heat exchange tube being configured to accommodate the working fluid, said heat exchange tube comprising a working fluid inlet and a working fluid outlet, said heat exchange tube defining three zones, a first zone adjacent to said heat source gas outlet, a second zone adjacent to said heat source gas inlet, and a third zone disposed between said first zone and said second zone, said working fluid inlet being in direct fluid communication with said first zone, and said working fluid outlet being in direct fluid communication with said third zone; and wherein said first zone is not in direct fluid communication with said third zone.
12. The method according to clause 11, wherein the heat source gas has a temperature T1 in a range from about 400°C to about 600°C.
13. The method according to clause 11 or clause 12, wherein the heat source gas has a temperature T2 in a range from about 100°C to about 250°C.
14. The method according to any of clauses 11 to 13, wherein the working fluid is a hydrocarbon.
15. The method according to any of clauses 11 to 14, wherein the working fluid is a hydrocarbon is selected from the group consisting of methylcyclobutane, cyclopentane, isopentane, cyclohexane, and methycyclopentane.
16. The method according to any of clauses 11 to 15, wherein the superheated gaseous working fluid has a temperature T3 in a range from below 300°C.
17. The method according to any of clauses 11 to 16, wherein the work extraction device is a turbine
18. The method according to any of clauses 11 to 17, wherein the working fluid in the first zone is at a temperature in a range from about 20°C to about 150°C.
19. The method according to any of clauses 11 to 18, wherein the working fluid in the second zone is at a temperature in a range from about 50°C to about 300°C.
20. The method according to any of clauses 11 to 19, wherein the working fluid in the third zone is at a temperature in a range from about 200°C to about 300°C.

## Claims

1. A direct evaporator apparatus (10, 60, 146) for use in an organic Rankine cycle energy recovery system, comprising:
(a) a housing (44) comprising a heat source gas inlet (36), and a heat source gas outlet (38), said housing (44) defining a heat source gas flow path (46) from said inlet to said outlet; and
(b) a heat exchange tube (18) disposed entirely within said heat source flow path, said heat exchange tube being configured to accommodate an organic Rankine cycle working fluid, said heat exchange tube comprising a working fluid inlet (40) and a working fluid outlet (42), said heat exchange tube defining three zones, a first zone (20, 72, 102) adjacent to said heat source gas outlet (38), a second zone (22, 76,104) adjacent to said heat source gas inlet (36), and a third zone (24, 74, 106) disposed between said first zone (20, 72, 102) and said second zone (22, 76,104), said working fluid inlet (40) being in direct fluid communication with said first zone (20, 72, 102), and said working fluid outlet (42) being in direct fluid communication with said third zone (24, 74, 106);
wherein said first zone (20, 72, 102) is not in direct fluid communication with said third zone (24, 74, 106).

2. The direct evaporator apparatus (10, 60, 146) according to claim 1, wherein said heat exchange tube (18) comprises a plurality of bends in each of the first zone (20, 72, 102), second zone (22, 76,104) and third zone (24, 74, 106).

3. The direct evaporator apparatus (10, 60, 146) according to claim 1 or claim 2, wherein in each of the first zone (20, 72, 102), second zone (22, 76,104)\ and third zone (24, 74, 106) of the heat exchange tube (18) is configured in at least one row.

4. An organic Rankine cycle energy recovery system (130) comprising:
(a) a direct evaporator apparatus (10, 60, 146) comprising (i) a housing (44) comprising a heat source gas inlet (36) and a heat source gas outlet (38), said housing (44) defining a heat source gas flow path from said inlet to said outlet; and (ii) a heat exchange tube (18) disposed entirely within said heat source flow path, said heat exchange tube (18) being configured to accommodate an organic Rankine cycle working fluid, said heat exchange tube (18) comprising a working fluid inlet (40) and a working fluid outlet (42), said heat exchange tube (18) defining three zones, a first zone (20, 72, 102) adjacent to said heat source gas outlet (38), a second zone (22, 76,104) adjacent to said heat source gas inlet (36), and a third zone (24, 74, 106) disposed between said first zone (20, 72, 102) and said second zone (22, 76,104), said working fluid inlet (40) being in direct fluid communication with said first zone (20, 72, 102), and said working fluid outlet (42) being in direct fluid communication with said third zone (24, 74, 106);
(b) work extraction device (158);
(c) a condenser (164); and
(d) a pump (166);
wherein the direct evaporator apparatus, work extraction device (158), condenser (164) and pump (166) a configured to operate as a closed loop.

5. The energy recovery system according to claim 4, further comprising a recouperator (162).

6. The energy recovery system according to claim 4 or claim 5, wherein the work extraction device (158) comprises a turbine.

7. The energy recovery system according to claim 6, further comprising a turbine by-pass duct.

8. A method of energy recovery comprising:
(a) introducing a heat source gas (16) having a temperature into a direct evaporator apparatus (10, 60, 146) containing a liquid working fluid;
(b) transferring heat from the heat source gas (16) having a temperature T1 (32) to the working fluid to produce a superheated gaseous working fluid (150) and a heat source gas having temperature T2 (34);
(c) expanding the superheated gaseous working fluid having a temperature T3 (24) through a work extraction device (158) to produce mechanical energy and a gaseous working fluid having a temperature T4 (28);
(d) condensing the gaseous working fluid to provide a liquid state working fluid; and
(e) returning the liquid state working fluid to the direct evaporator apparatus;
wherein the direct evaporator apparatus (10, 60, 146) comprises (i) a housing (44) comprising a heat source gas inlet (36), and a heat source gas outlet (38), said housing (44) defining a heat source gas flow path from said inlet to said outlet; and a heat exchange tube (18) disposed entirely within said heat source flow path, said heat exchange tube (18) being configured to accommodate the working fluid, said heat exchange tube (18) comprising a working fluid inlet (40) and a working fluid outlet (42), said heat exchange tube (18) defining three zones, a first zone (20, 72, 102) adjacent to said heat source gas outlet (38), a second zone (22, 76,104) adjacent to said heat source gas inlet (36), and a third zone (24, 74, 106) disposed between said first zone (20, 72, 102) and said second zone (22, 76,104), said working fluid inlet (40) being in direct fluid communication with said first zone (20, 72, 102), and said working fluid outlet (42) being in direct fluid communication with said third zone (24, 74, 106); and wherein said first zone (20, 72, 102) is not in direct fluid communication with said third zone (24, 74, 106).

9. The method according to claim 8, wherein the heat source gas has a temperature T1 (32) in a range from about 400°C to about 600°C.

10. The method according to claim 8 or claim 9, wherein the heat source gas has a temperature T2 (34) in a range from about 100°C to about 250°C .
